# EUROPEAN PATENT APPLICATION

(11) **EP 2 314 770 A1**
(43) Date of publication of application: **27.04.2011**
(21) Application number: 09173671.0
(22) Date of filing: 21.10.2009
(51) Int. Cl.: E01D 19/00, F16F 7/10

(54) **Semi-active system for vibration suppression in pedestrian footbridges and such like**

(71) Applicant: Fundacion Cartif, 47151 Boecillo (ES)
(72) Inventor: Casado Sanchez, Carlos, 47140, LAGUNA DE DUERO (VALLADOLID) (ES); De Sebastian Sanz, Jesús, 47015, VALLADOLID (ES); Poncela Méndez, Alfonso, 47008, VALLADOLID (ES)
(74) Representative: PROPI, S.L.

(57) **Abstract**

Semi-active system for vibration suppression in pedestrian footbridges and such like, comprising a frame (1), preferably rectangular and made of steel plates, which fits onto the structure whereto it is to be applied, a pedestrian footbridge or any other suitable similar structure, in whose interior is arranged a modular mass (4) placed on a basket (5) guided vertically at its ends through a plurality of springs (2) and adjustable semi-active shock absorbers (3), where a measurement system (8) for the frame (1) and the modular mass (4), together with the control device (9), allow for the optimal determination of the absorption by the semi-active shock absorbers (3). The semi-active shock absorbers (3) used are magnetic-rheological, electric-rheological or mechanical variable orifice systems.

## Description

Semi-active system for vibration suppression in pedestrian footbridges and such like.

### Object of the invention

The present invention relates to a semi-active system for vibration suppression in structures, specifically for pedestrian footbridges and such like, thanks to which notable improvements are achieved with respect to the systems of this type known to date, whose improvements affect the dynamic behaviour of pedestrian footbridges.

### Background of the invention

Pedestrian footbridges are structures which, in many cases, are light, with fundamentally low frequencies and normally within the ranges of typical pedestrian crossing frequencies when the pedestrians walk or run. For this reason, pedestrian footbridges are structures which may suffer high vibration levels as a consequence of the direct action of the pedestrians as they pass over them.

Vibration suppression systems are known in civil structures. These systems are basically mobile masses coupled to the structures by means of different mechanical devices, such as springs, shock absorbers, etc., so that their movement is synchronized to the frequency of the structure which one wants to absorb. In general, these systems are passive and, in some cases, active. Passive systems known as passive mass dampers or TMDs (Tuned Mass Damper) feature as a main drawback their critical loss of effectiveness when the frequency of the structure for which they have been synchronized varies slightly. On the other hand, AMDs (Active Mass Dampers) feature as a drawback the necessity of a continuous and high supply of electrical energy for the operation and control of their electromechanical and hydraulic devices, as well as the necessity for thorough maintenance.

Currently, passive and active vibration damper systems which can be incorporated in civil structures are designed to reduce the vibrations in the vertical and horizontal directions of the structure. In the vertical case, the mass tends to be coupled to the structure by means of springs, in some cases being guided by axles and bearings. In the horizontal case, the mass is moved by rails, or is arranged in a pendulum like form.

With respect to the current state of the art, a new system has been devised in order to achieve a sturdier system against the resynchronization problems typical in passive systems, and with minimum demands with regard to the electrical energy levels and maintenance required with respect to active systems. These systems are those called semi-active systems.

### Description of the invention

The present invention relates to a new semi-active system to suppress vibrations in pedestrian footbridges and such like formed by a mobile mass which is coupled through a frame to the structure by means of springs and semi-active shock absorbers adjusted by means of control algorithms based on the means of acceleration, velocity or displacement of the frame and the mobile basket.

The new semi-active system to suppress vibrations is made up of a frame which is positioned by means of a rigid joint to the pedestrian footbridge. The springs and semi-active shock absorbers are rigidly joined to the frame and to the basket in the places arranged for such a purpose and the mass is placed on the basket. The system made up by the mass and the basket is displaced, guided by the axles arranged for this purpose. The system can have buffers placed on the frame so that the mass has a limited stroke. At the same time, it will have two speed acceleration or vertical displacement measuring elements on the frame and on the basket. Said elements are necessary to establish the absorption value of the semi-active shock absorption at each moment by means of the suitable control algorithm.

With this configuration, and once the optimal parameters of the springs and semi-active shock absorbers have been calculated, relative movements are achieved between the basket and the structure in vertical direction which permits the efficient transfer of part of the energy of the vibrating movement of the structure to the vibration suppression system and, therefore, absorbs it. The energy transferred to the semi-active system disappears in the semi-active shock absorbers arranged for this purpose and in the hysteretic behaviour of the material, from which the springs may be manufactured.

The spring features a sufficient elasticity so as to permit the temporary deformation thereof in vertical direction by means of the vibration produced by the structure, and again recover its position by stopping said vibration.

The semi-active shock absorber is a shock absorber whose instantaneous absorption value can be controlled. The usual embodiments of this kind of shock absorbers are those wherein the fluid passage section between the two chambers of the shock absorber can be modified by means of adjustable valves or other mechanical devices, and those wherein special fluids are used which modify their characteristics by means of the application of magnetic or electric fields. These fluids are known as magnetic-rheological and electric-rheological fluids, respectively.

In order to control semi-active shock absorbers, laws of control will be applied which are based on absolute and relative analytical load-displacement, velocity and acceleration relationships between the footbridge and the semi-active system.

Mitigating the vibration level which the pedestrian footbridge undergoes both improves the comfort of the pedestrians and diminishes the fatigue cycles to which the structure is subjected, thus increasing its useful life.

### Description of the drawings

In order to complete the description being carried out and with the purpose of helping towards a better understanding of the characteristics of the invention, in accordance with a preferred example of embodiment thereof, a set of drawings is attached as an integral part of said description, wherein the following, in an illustrative and non-limitative character, has been represented:
Figure 1 shows a perspective view of a preferred embodiment of the semi-active system for vibration suppression of the invention;
Figure 2 shows another perspective view of a preferred embodiment of the semi-active system for vibration suppression of the invention;

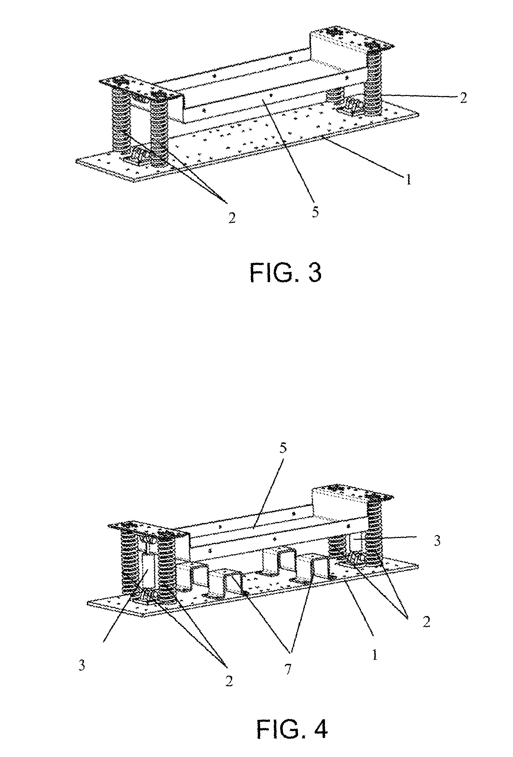

Figure 3 shows a view of the assembly of the springs in the frame and their coupling to the basket of the masses, without including part of the frame for a better viewing;
Figure 4 shows a view of the assembly of the magnetic-rheological dampers and the arrangement of metal buffers where the rubber buffers will be positioned with an adjustable height, without including part of the frame for a better viewing;

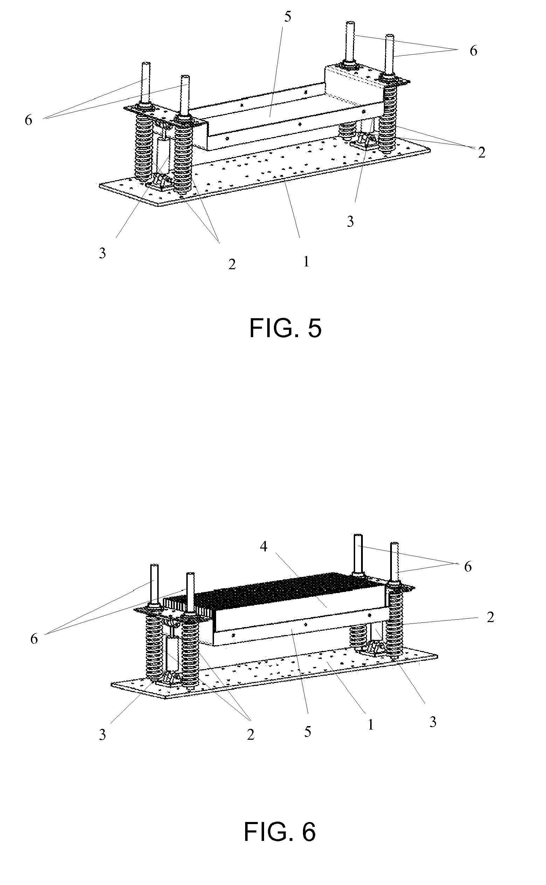

Figure 5 shows a view of the previous arrangement of Figure 4, but with axle guides, which limit the movement of the basket to a vertical movement, without including part of the frame for a better viewing;
Figure 6 shows a perspective view of the semi-active system for vibration suppression of the invention with axles, without including part of the frame for a better viewing;

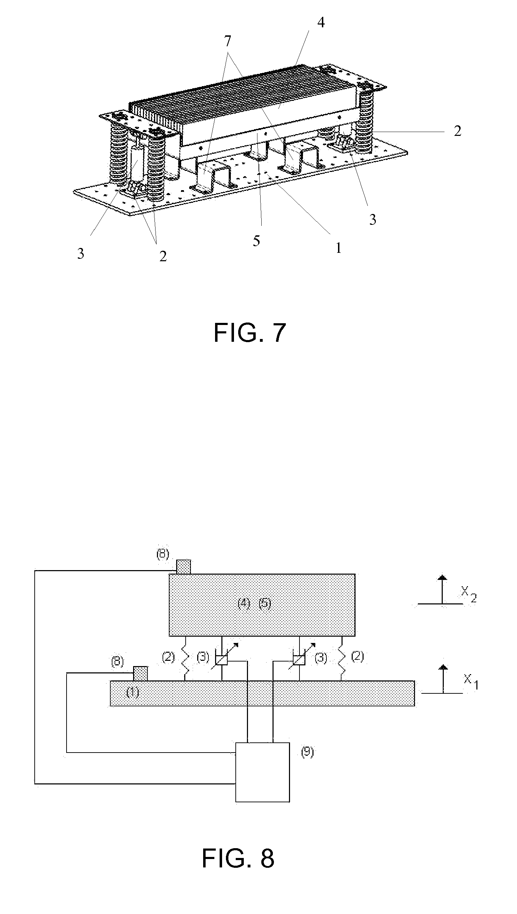

Figure 7 shows a perspective view of the semi-active system for vibration suppression of the invention without axles, without including part of the frame for a better viewing;
Figure 8 shows a schematic diagram of control, where the controller will record the acceleration, velocity or displacement signals of the frame and the basket and will establish the electrical signals for the generation of the suitable magnetic field in the magnetic-rheological shock absorbers based on the control algorithm implementing.
Figure 9 shows a perspective view of the semi-active system for vibration suppression with axles.

### Preferred embodiment of the invention

The proposed invention consists of a semi-active system for vibration suppression in pedestrian footbridges and such like, which is able to ease the level of vibrations which the pedestrian footbridge endures, improving the comfort of the pedestrians, and decreasing the fatigue cycles which the structure is submitted to, and thereby increasing the useful life thereof.

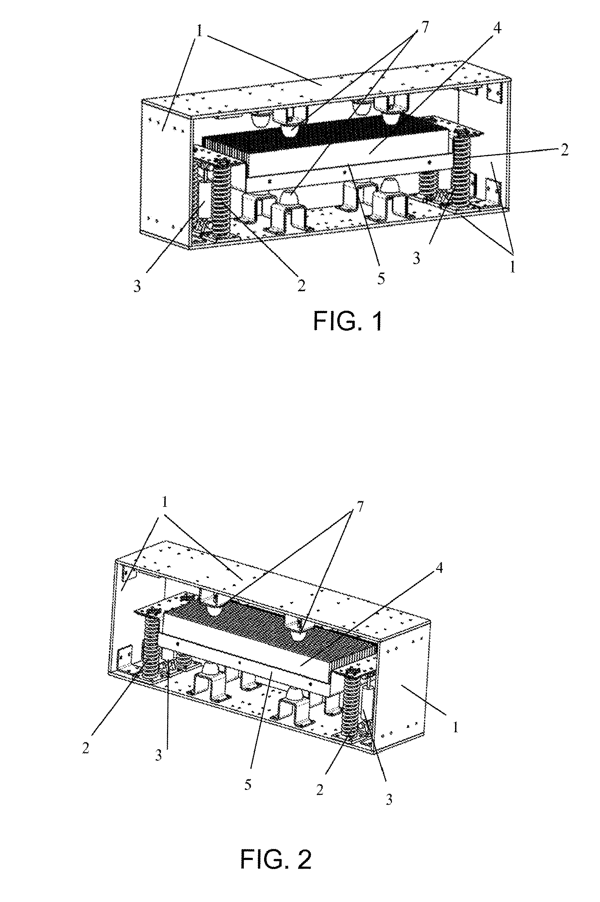

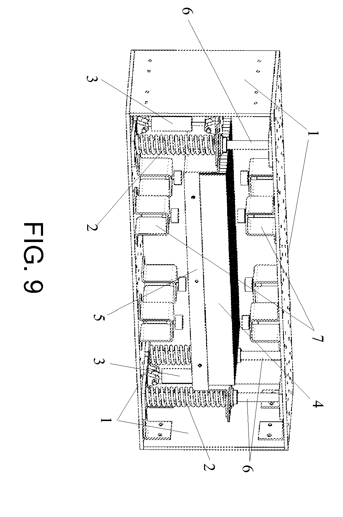

This proposed semi-active system comprises a frame (1), as can be observed in Figures 1 and 9, preferably rectangular, formed by steel plates, which join to the structure whereto they are going to be applied, pedestrian footbridge or any other suitable similar structure. In the interior of said frame (1) is arranged a modular mass (4) placed on a mobile basket (5), guided vertically at its ends through a plurality of springs (2) and semi-active, adjustable shock absorbers (3). In the attached Figures, the system has been represented with 4 springs and 2 dampers, but this can be modified. There is also a measurement system (8) for the frame (1) and the modular mass (4), together with a control device (9), which permits the optimal determination of the damping of the arranged semi-active shock absorbers (3).

The proposed system can also have end stroke buffers (7) limiting the course of the mass (4), which can be arranged on the basket (5) or directly on the frame (1).

Likewise, another possibility consists of the incorporation of axles (6) which pass through the ends of the basket (5), placing themselves inside the springs (2), and thereby guiding the vertical stroke of the modular mass (4) and basket (5) array.

The essential characteristics of the semi-active system for vibration suppression consist in the fact that the modular mass (4) can have relative movements as it is sustained on semi-active mechanical systems so that it has the optimal configuration at all times for the production of the greatest transfer of energy possible from the pedestrian footbridge or structure to the vibration damping system. In general, the movement of the system is offset from the movement of the footbridge, so that due to the relative movement, energy disappears in the semi-active shock absorbers (3) or in the material from which the resort (2) is constituted.

The semi-active shock absorbers (3) used are magnetic-rheological, electric-rheological or mechanical variable orifice systems. A magnetic-rheological shock absorber uses a magnetic-rheological fluid made up of oil and suspended metallic particles which has the property of being more or less fluid depending on the magnetic field which is applied thereto and therefore varies the overall value of the damping thereof. Within the different configurations of these kinds of shock absorbers, a sponge-type configuration is decided upon which gives us minimum damping values when no type of magnetic field is applied.

As we have mentioned, the proposed system for vibration suppression comprises a measurement system (8) for the frame (1) and the modular mass (4), which will measure a characteristic chosen between acceleration, velocity or displacement, in the vertical direction at each moment. The control algorithm of the control device (9) is based on an ON-OFF GroundHook Control scheme whose input signals are the direct measurement of the acceleration, velocity or displacement values of the frame (1) and the basket (5) and have as output signals the suitable intensities to modify the magnetic fields of the semi-active magnetic-rheological shock absorbers (3). This control algorithm can be implemented both in an industrial computer and in electronic systems designed specifically for this function.

## Claims

1. Semi-active system for vibration suppression in pedestrian footbridges and such like, **characterised in that** it comprises a frame (1), preferably rectangular formed by steel plates, which joins to the structure whereto it is going to be applied, pedestrian footbridge or any other suitable similar structure, in whose interior is arranged a modular mass (4) placed on a basket (5) guided vertically at its ends through a plurality of springs (2) and adjustable semi-active shock absorbers (3), where a measurement system (8) for the frame (1) and the modular mass (4), together with the control device (9), permit the optimal determination of the damping of the semi-active shock absorbers (3).

2. Semi-active system for vibration suppression in pedestrian footbridges and such like, according to claim 1, **characterised in that** the semi-active shock absorbers (3) used are magnetic-rheological, electric-rheological or mechanical variable orifice systems.

3. Semi-active system for vibration suppression in pedestrian footbridges and such like, according to previous claims, **characterised in that** the measurement system (8) for the frame (1) and the modular mass (4) will measure a characteristic chosen between acceleration, velocity or displacement, in the vertical direction at each moment.

4. Semi-active system for vibration suppression in pedestrian footbridges and such like, according to previous claims, **characterised in that** the control device (9) includes a GroundHook control algorithm in the measurement signals, whether they are acceleration, velocity or displacement, of the semi-active shock absorbers (3).

5. Semi-active system for vibration suppression in pedestrian footbridges and such like, according to claim 4, **characterised in that** the control algorithm can be implemented in both an industrial computer and in electronic systems designed specifically for this function.

6. Semi-active system for vibration suppression in pedestrian footbridges and such like, according to previous claims, **characterised in that** it has end stroke buffers (7) limiting the course of the mass (4).

7. Semi-active system for vibration suppression in pedestrian footbridges and such like, according to claim 6, **characterised in that** the end stroke buffers (7) are arranged on the basket (5).

8. Semi-active system for vibration suppression in pedestrian footbridges and such like, according to claim 6, **characterised in that** the end stroke buffers (7) are arranged directly on the frame (1).

9. Semi-active system for vibration suppression in pedestrian footbridges and such like, according to previous claims, **characterised in that** it has axles (6) which pass through the ends of the basket (5), placing themselves inside the springs (2), and thereby guiding the vertical stroke of the modular mass (4) and basket (5) array.
